Europäisches Patentamt

European Patent Office

Office européen des brevets

(11) Veröffentlichungsnummer: **0 160 857**

A2

# (12) EUROPÄISCHE PATENTANMELDUNG

(21) Anmeldenummer: **85104494.1**

(22) Anmeldetag: **13.04.85**

(51) Int. Cl.⁴: **B 29 C 47/06**
**B 29 C 47/14**
**//B29L30/00, B29L9/00**

(30) Priorität: **11.05.84 DE 3417452**

(43) Veröffentlichungstag der Anmeldung·
**13.11.85 Patentblatt 85/46**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Schallmeier, Günter, Dipl.-Ing.**
**Brandenburger Ring 12**
**D-3053 Neustadt 1(DE)**

(72) Erfinder: **de Vries, Gerhard, Dr. Dipl.-Ing.**
**Im Hespe 36**
**D-3008 Garbsen 4(DE)**

(54) **Einrichtung zum Herstellen von aus zwei oder mehr Schichten zusammengesetzten flachen Profilsträngen aus plastischen Kautschuk- oder Kunststoffmischungen.**

(57) Mehrschichtig zusammengesetzte Rohlaufstreifen für Luftreifen werden in Einrichtungen mit zwei und mehr nach einem gemeinsamen Mundstück fördernden Strangpressen als einheitlich zusammenhängende Profilstreifen hergestellt, wobei die Teilströme verschiedener Elastomermischungen nach dem Ablaufen von einer feststehenden Trennzunge in einer dem Mundstück unmittelbar vorgeordneten Vorschablone in haftende Verbindung miteinander zusammengeführt werden. Die Erfindung strebt eine verbesserte Haftung der Teilströme aneinander an, und sie erreicht dies durch Vergrößern der Haftflächen und durch Erzeugen von Relativbewegungen der nebeneinander fließenden Stromfäden in dem Grenzflächenbereich.

Nach einer Ausführungsform der Erfindung kann dies durch Ausbilden der Oberflächen der Trennzunge mit aufeinanderfolgenden Erhöhungen und Vertiefungen und nach einer anderen Ausführungsform durch Ausbilden der Vorderkante der Trennzunge mit aufeinanderfolgenden Ausnehmungen und Vorsprüngen erreicht werden.

FIG. 1

**Continental Gummi-Werke Aktiengesellschaft, 3000 Hannover**

**Einrichtung zum Herstellen von aus zwei oder mehr Schichten zusammengesetzten flachen Profilsträngen aus plastischen Kautschuk- oder Kunststoffmischungen**

Die Erfindung bezieht sich auf Einrichtungen zum Herstellen von aus zwei oder mehr Schichten zusammengesetzten flachen Profilsträngen aus plastischen Kautschuk- oder Kunststoffmischungen, insbesondere von Rohlaufstreifen für Luftreifen, mit mindestens zwei die die verschiedenen Strangschichten bildenden Teilströme über eine Vorschablone nach einem gemeinsamen Auspreßmundstück fördernden Strangpressen, wobei jeweils einander benachbarten Strangschichten zugeordnete Teilströme mit dem Ablaufen von einer feststehenden Trennzunge im Eingangsbereich der Vorschablone zusammengeführt werden.

Es ist eine in der Kautschuk- und Kunststoff-Technologie schon seit längerem bekannte und übliche Praxis, Mehrschichten-Profilstränge durch Vereinigen der von mehreren eigenen Strangpressen geförderten Teilströme plastischer Mischung in einem gemeinsamen Mundstück zusammenhängend herzustellen, wovon beispielsweise zum Vorformen der Rohlaufstreifen für Fahrzeugluftreifen mit Vorteil Gebrauch gemacht wird. Das einwandfreie Vereinigen der Teilströme miteinander in einem gemeinsamen Preßkopf wirft zwar erhebliche Probleme auf, die aber mit bekannten Einrichtungen nach dem Einführen einer dem Mundstück vorgeordneten Vorschablone mit einer die Teilströme leitenden und als Verlängerung der inneren Strömungskanalwandungen im Eingangsbereich der Vorschablone endenden Trennzunge beherrscht werden konnten. Trotzdem zeigten sich im Gebrauch der so hergestellten Laufstreifen gelegentlich doch immer wieder zumindest in Ansätzen Bindungsfehler in dem Schichtenaufbau, die umso weniger erklärlich waren, als die Teilströme gleichsam im "status nascendi" ohne störende Außenhaut in der Vorschablone zusammenlaufen und daher schon von Grund auf günstige Voraussetzungen für eine vollflächige Haftung vorliegen. Der Erfindung liegt demgemäß als Aufgabe zugrunde, die innere Bindung der zusammengesetzten Profilstränge zu verbessern und gegen anscheinend zufällige Fehlermöglichkeiten sicherer zu machen.

Nach der Erfindung ist in Einrichtungen der eingangs geschilderten Gattung mindestens eine der die einander zugekehrten Haftflächen der Teilströme abformenden Oberflächen der Trennzunge mit über deren Breite im Wechsel aufeinanderfolgenden Vertiefungen und Erhöhungen ausgebildet, wobei sich im Falle doppelseitiger Ausbildung eine auf beiden Seiten gegeneinander versetzte Anordnung empfiehlt.

Die Erfindung führt zu einer Vergrößerung der miteinander zu vereinigenden Haftflächen und in der Folge an den fertigen Profilsträngen zu Veränderungen in der Belastungsrichtung der Verbindungsnaht. Die sonst als Hauptursache der auftretenden Bindungsschwächen anzusehenden, im Molekularbereich sich abspielenden Grenzflächeneffekte werden dadurch weitgehend abgebaut, so daß die Bindung in allen Schichten fortlaufend gleichmäßig gut ausfällt und die Profilstränge im Gebrauch auch höheren Scherbeanspruchungen ohne die Gefahr örtlicher Trennung ausgesetzt werden können.

Zweckmäßig weisen die in die Trennzunge eingearbeiteten Vertiefungen und Erhöhungen einander kongruente Querschnittsformen auf, wobei als Grundform etwa Dreiecks- oder Vierecksgestalt, beispielsweise Trapez-, Rechteck- oder Quadratform oder aber auch von Kreisbogen oder anderen Kurven begrenzte Konturen gewählt werden können. In einer bevorzugten Ausführungsform der Erfindung weisen die Vertiefungen und Erhöhungen einen im wesentlichen sägezahnförmigen Querschnitt auf, da sich hieraus Relativbewegungen der nebeneinander fließenden Stromfäden mit geringfügiger Vermischung und zusätzlich eine wenn auch auf den Mikro-

- 3 -

0160857

bereich beschränkte formschlüssige Verklammerung der zusammenlaufenden Teilströme ergeben, was wiederum noch günstigere Voraussetzungen zum Erzielen einwandfreier Bindungen schafft.

Gemäß einer Variante der Erfindung kann die Trennzunge anstatt mit strukturierten Oberflächen auch mit einer über ihre Breite im Wechsel aufeinanderfolgende Ausnehmungen und Vorsprünge aufweisenden Vorderkante - in Ablaufrichtung gesehen - ausgebildet sein, wobei die hinsichtlich ihrer Querschnittsgestalt ebenfalls einander kongruenten Ausnehmungen und Vertiefungen wiederum mauerkronenartig, spitzzahnig, gewellt oder in ähnlicher Weise geformt sein können. Die damit im Ablaufbereich der Teilströme hervorgerufenen Druckunterschiede haben ihrerseits Relativbewegungen in der Grenzschicht zur Folge, woraus sich letzten Endes ebenfalls der angestrebte Mischungseffekt ergibt.

Die Erfindung ist anhand der schematischen Darstellung verschiedener Ausführungsbeispiele verdeutlicht. In der Zeichnung ist:

Fig. 1 ein Teilstück eines Zweifach-Strangpreßkopfes in Querschnittsdarstellung;

Fig. 2 bis 4 Ansichten nach der Linie I÷I in Fig. 1 auf verschiedene Ausführungsformen der Trennzunge in Fig. 1 in vergrößertem Maßstab;

Fig. 5 ein Strangpreßkopf in einer Fig. 1 entsprechenden Darstellung mit einer als Variante der Erfindung abgeänderten Trennzunge und

Fig. 6 bis 7 ausschnittsweise Draufsichten auf die Trennzunge in Fig. 5 mit verschiedenartig ausgebildeter Vorderkante in vergrößertem Maßstab.

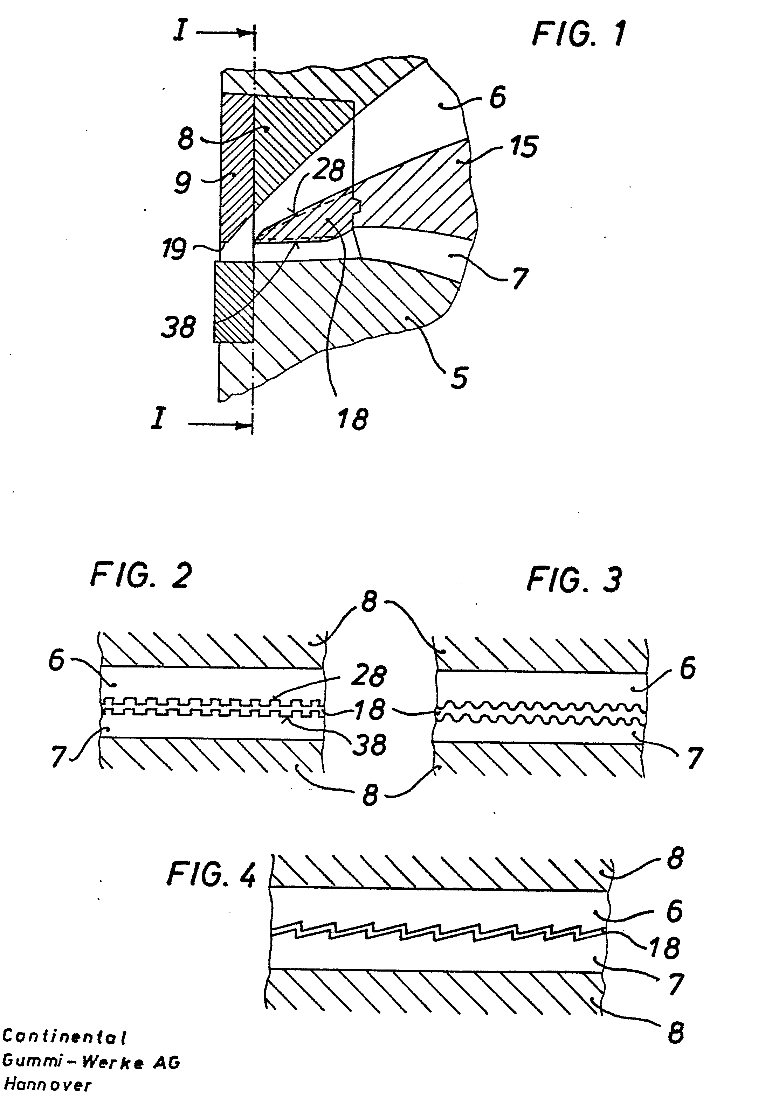

Den in Fig. 1 gezeichneten Preßkopf 5 durchziehen in Übereinanderanordnung zwei Strömungskanäle 6, 7, welche die von zwei nicht weiter dargestellten Strangpressen geförderte plastische Preßmasse unter trichterartig sich verengendem Querschnitt über eine Vorschablone 8 dem formgebenden gemeinsamen Mundstück 9 zuführen. Die jeweils für sich aufbereiteten Teilströme unterschiedlichen Mischungsaufbaues fließen in den Kanälen 6, 7 zunächst noch durch die feste Wand 15 getrennt voneinander, um nach Ablaufen von einer in Verlängerung und als Abschluß der Wand 15 in die Vorschablone 8 vorkragenden Trennzunge 18 sich mit ihren einander zugekehrten Haftflächen aneinanderzulegen und als einheitliches Gebilde durch die Düse 19 des Mundstückes 9 auszutreten. Einrichtungen dieser Art, in der Praxis als "Duplex-Strangpressen" bezeichnet, finden beispielsweise zum Herstellen von Luftreifen-Laufstreifen Verwendung, wobei durch den Kanal 6 eine besonders abriebfeste Laufflächenmischung und durch den Kanal 7 eine besonders bindefreudige Grundmischung gefördert wird.

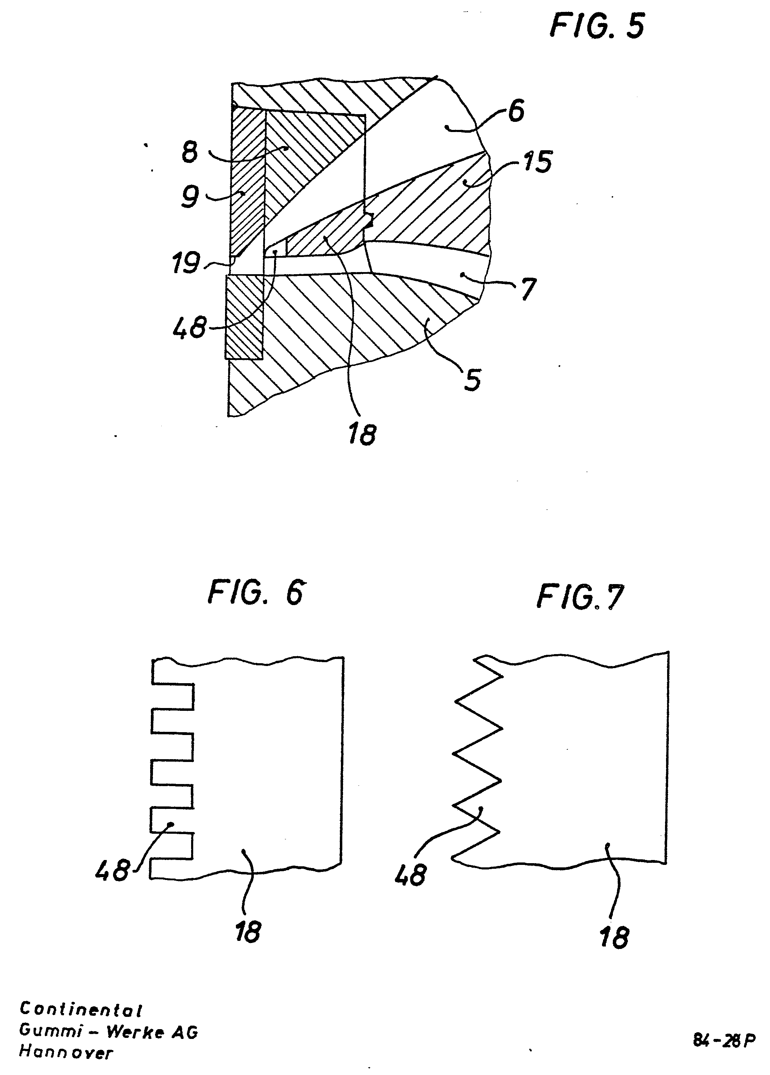

Die auswechselbar an der Wand 15 angebrachte Trennzunge 18 ist auf einer oder auf beiden Oberflächen 28, 38 mit in Strömungsrichtung parallel zueinander verlaufenden, über ihre Breite im Wechsel aufeinanderfolgenden Vertiefungen und Erhöhungen ausgebildet. Gemäß der Darstellung in Fig. 2 haben die untereinander kongruenten Oberflächenstrukturierungen, deren Höhe in einer Größenordnung von wenigen Zehntel Millimetern bemessen sein kann, eine quadratische bzw. Rechteckform, während sie nach Fig. 3 etwa halbkreisförmig und nach Fig. 4 wiederum sägezahnartig gestaltet sind. Die Erfindung ist aber nicht auf die nur als Ausführungsbeispiele angedeuteten Querschnittsformen beschränkt.

Der in Fig. 5 gezeichnete Strangpreßkopf 5 unterscheidet sich von der vorbeschriebenen Einrichtung allein durch die Ausbildung der Trennzunge 18, die in diesem Falle mit glatten Oberflächen aber mit durchbrochener Vorderkante 48 ausgeführt ist. Gemäß der Ausführungsform in Fig. 6 sind die Durchbrechungen als mauerkronenartig aufeinanderfolgende Ausnehmungen und Vorsprünge, gemäß der Ausführungsform in Fig. 7 als spitzwinklig-dreieckige Zähne und Zahnlücken geformt. Es sind aber auch andere Flächengestalten ohne Wirkungseinbuße denkbar und möglich.

Patentansprüche:

1. Einrichtung zum Herstellen von aus zwei oder mehr Schichten zusammengesetzten flachen Profilsträngen aus plastischen Kautschuk- oder Kunststoffmischungen, insbesondere von Rohlaufstreifen für Luftreifen, mit mindestens zwei die die verschiedenen Strangschichten bildenden Teilströme über eine Vorschablone nach einem gemeinsamen Auspreßmundstück fördernden Strangpressen, wobei jeweils einander benachbarten Strangschichten zugeordnete Teilströme mit dem Ablaufen von einer feststehenden Trennzunge im Eingangsbereich der Vorschablone zusammengeführt werden, dadurch gekennzeichnet, daß mindestens eine der die einander zugekehrten Haftflächen der Teilströme abformenden Oberflächen (28, 38) der Trennzunge (18) mit über deren Breite im Wechsel aufeinanderfolgenden Vertiefungen und Erhöhungen ausgebildet ist.

2. Einrichtung zum Herstellen von aus zwei oder mehr Schichten zusammengesetzten flachen Profilsträngen aus plastischen Kautschuk- oder Kunststoffmischungen, insbesondere von Rohlaufstreifen für Luftreifen, mit mindestens zwei die die verschiedenen Strangschichten bildenden Teilströme über eine Vorschablone nach einem gemeinsamen Auspreß-Mundstück fördernden Strangpressen, wobei jeweils einander benachbarten Strangschichten zugeordnete Teilströme mit dem Ablaufen von einer feststehenden Trennzunge im Eingangsbereich der Vorschablone zusammengeführt werden, dadurch gekennzeichnet, daß die in Ablaufrichtung vordere Kante (48) der Trennzunge (18) mit über ihre Breite im Wechsel aufeinanderfolgenden Ausnehmungen und Vorsprüngen ausgebildet ist.

3. Einrichtung nach Anspruch 1, dadurch gekennzeichnet, daß die Vertiefungen und Erhöhungen auf beiden Seiten (28, 38) der Trennzunge (18) versetzt gegeneinander angeordnet sind.

4. Einrichtung nach den Ansprüchen 1 und 3, dadurch gekennzeichnet, daß die Vertiefungen und Erhöhungen einander kongruente geometrische Querschnittsformen aufweisen.

5. Einrichtung nach den Ansprüchen 1, 3 und 4, dadurch gekennzeichnet, daß die Vertiefungen und Erhöhungen einen im wesentlichen dreieck- oder viereckförmigen Querschnitt (Fig. 2) aufweisen.

6. Einrichtung nach den Ansprüchen 1 und 3 bis 5, dadurch gekennzeichnet, daß die Vertiefungen und Erhöhungen einen im wesentlichen sägezahnförmigen Querschnitt (Fig. 4) aufweisen.

7. Einrichtung nach den Ansprüchen 1, 3 und 4, dadurch gekennzeichnet, daß die Vertiefungen und Erhöhungen eine abgerundete Querschnittsform (Fig. 3) aufweisen.

8. Einrichtung nach Anspruch 2, dadurch gekennzeichnet, daß die Ausnehmungen und Vorsprünge der Trennzungen-Vorderkante (48) einander kongruente Flächengestalt aufweisen.

9. Einrichtung nach den Ansprüchen 1 bis 8, dadurch gekennzeichnet, daß die Trennzunge (18) auswechselbar eingebaut ist.

Hannover, den 8. Mai 1984
84-28 P/Sü          Sü/Lo

0160857

**FIG. 1**

I

8
9
19
38

28
6
15
7
5

18

I

**FIG. 2**

6

7

8

28
18
38

8

**FIG. 3**

8

6

7

**FIG. 4**

8
6
18
7
8

Continental
Gummi-Werke AG
Hannover

0160857

**FIG. 5**

**FIG. 6**

**FIG. 7**

Continental
Gummi – Werke AG
Hannover

84-28P